# EUROPÄISCHE PATENTANMELDUNG

(11) **EP 2 385 311 A2**
(43) Veröffentlichungstag der Anmeldung: **09.11.2011**
(21) Anmeldenummer: 11164031.4
(22) Anmeldetag: 28.04.2011
(51) Int. Cl.: F24C 7/08, G08C 17/02, H02J 7/00, H02J 7/02

(54) **Bedienteil für eine Haushaltsarbeitsstation, Haushaltsarbeitsstation sowie System aus der Haushaltsarbeitsstation und dem Bedienteil**

(30) Priorität: 03.05.2010 DE 102010028493
(71) Anmelder: BSH Bosch und Siemens Hausgeräte GmbH, 81739 München (DE)
(72) Erfinder: Bally, Ingo, 83278, Traunstein (DE); Dinkel, Alexander, 83246, Unterwoessen (DE); Fuchs, Wolfgang, 83352, Altenmarkt a.d. Alz (DE); Leitmeyr, Claudia, 83301, Traunreut (DE); Namberger, Angelika, 83352, Altenmarkt a.d. Alz (DE); Reindl, Michael, 84137, Vilsbiburg (DE); Roch, Klemens, 83308, Trostberg (DE); Sauerbrey, Jens, 83339, Chieming (DE); Schnell, Wolfgang, 83308, Trostberg (DE); Sorg, Matthias, 83379 Wonneberg (DE); Zschau, Günter, 83374, Traunwalchen (DE)

(57) **Zusammenfassung**

Bedienteil (3) für eine Haushaltsarbeitsstation (2), wobei das Bedienteil (3) mindestens eine Anzeigeeinheit (8) und mindestens eine Bedieneinheit (8) für eine Bedienung der Haushaltsarbeitsstation (2) aufweist, wobei das Bedienteil (3) zu seinem Betrieb auf die Haushaltsarbeitsstation (2) aufsetzbar ist und dadurch mit der Haushaltsarbeitsstation (2) transformatorisch koppelbar ist, eine drahtlose erste Datenschnittstelle (7) zur Kommunikation mit der Haushaltsarbeitsstation (2) aufweist und einen wiederaufladbaren Energiespeicher (10) aufweist. Die Haushaltsarbeitsstation (2) ist mit mindestens einer darin integrierten transformatorisch arbeitenden Basisstation (4) ausgestattet, wobei die Haushaltsarbeitsstation (2) bedienteilfrei ist und eine drahtlose Datenschnittstelle (7) zur Kommunikation mit der Haushaltsarbeitsstation (2) aufweist. Das System (1) aus der Haushaltsarbeitsstation und dem Bedienteil (3) ist so ausgestaltet, dass die Haushaltsarbeitsstation (2) und das Bedienteil (3) für eine reichweitenbegrenzte Zusammenarbeit eingerichtet sind, so dass die Basisstationen (4) nach Erreichen oder Überschreiten einer vorbestimmten Grenzreichweite deaktivierbar sind.

## Beschreibung

Die Erfindung betrifft ein Bedienteil für eine Haushaltsarbeitsstation, wobei für eine Haushaltsarbeitsstation, wobei das Bedienteil mindestens eine Anzeigeeinheit und mindestens eine Bedieneinheit für eine Bedienung der Haushaltsarbeitsstation aufweist. Die Haushaltsarbeitsstation ist mit mindestens einer darin integrierten transformatorisch arbeitenden Basisstation ausgerüstet. Das System besteht mindestens aus der Haushaltsarbeitsstation und dem Bedienteil.

DE 10 2005 022 352 A1 beschreibt eine Energieübertragungsvorrichtung mit einer Primärspule zum induktiven Übertragen von elektromagnetischer Energie mit einer Energieübertragungsfrequenz auf eine lösbare Sekundärspule und mit einem Sensiermittel zum Erfassen wenigstens einer Kenngröße einer die Sekundärspule umfassenden, lösbaren Sekundärseite. Um eine Energieübertragungsvorrichtung bereitzustellen, deren Sensiermittel besonders sicher Informationen über das Vorhandensein einer lösbaren Sekundärseite erfassen kann, koppelt das Sensiermittel eine Messspannung mit einer von der Energieübertragungsfrequenz verschiedenen Messfrequenz in die Sekundärspule ein.

DE 10 2006 017 801 A1 beschreibt eine Energieversorgungseinheit, umfassend eine Primärenergieübertragungseinheit mit einem Übertragungsbereich, welche in drahtlosem Zusammenwirken mit einer im Übertragungsbereich und vom Übertragungsbereich trennbaren Sekundärenergieempfangseinheit zur Versorgung eines Energieverbrauchers mit Energie vorgesehen ist. Um weist die Energieversorgungseinheit eine Erkennungseinheit auf, die dazu vorgesehen ist, ein Vorhandensein eines von der Sekundärenergieempfangseinheit unterschiedlichen Gegenstands in den Übertragungsbereich zu erkennen.

DE 103 43 011 A1 beschreibt eine Vorrichtung zum Erwärmen von Speisen mittels Induktion mit einem Bodenelement, das eine aus einem Stromleiter geformte sekundäre Wicklung und ein an die Wicklung angeschlossenes Heizelement umfasst. Die Erfindung geht außerdem aus von einer Vorrichtung zur Übertragung von Energie in eine Vorrichtung zum Erwärmen von Speisen mittels Induktion mit einer aus einem Stromleiter geformten und mit einer Spannungsquelle verbundenen primären Wicklung. Um eine geringe Bauhöhe des Bodenelements zu erreichen, ist innerhalb der Wicklung ein Wicklungskern angeordnet.

Es ist die Aufgabe der vorliegenden Erfindung, eine nutzerfreundlichere Möglichkeit zur Bedienung einer Haushaltsarbeitsstation, welche mit einer transformatorisch arbeitenden Basisstation ausgerüstet ist, bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch ein Bedienteil für eine Haushaltsarbeitsstation, wobei für eine Haushaltsarbeitsstation, wobei das Bedienteil mindestens eine Anzeigeeinheit und mindestens eine Bedieneinheit für eine Bedienung der Haushaltsarbeitsstation aufweist. Das Bedienteil ist ferner zu seinem Betrieb auf die Haushaltsarbeitsstation aufsetzbar und dadurch mit der Haushaltsarbeitsstation transformatorisch koppelbar. Das Bedienteil weist zudem eine drahtlose erste Datenschnittstelle zur Kommunikation mit der Haushaltsarbeitsstation und einen wiederaufladbaren Energiespeicher auf.

Dadurch, dass das Bedienteil nicht mehr fest in die Haushaltsarbeitsstation integriert ist, sondern abnehmbar gestaltet ist, kann zusätzlicher Arbeitsraum an der Haushaltsarbeitsstation, z.B. einer Arbeitsplatte, geschaffen werden. Zudem kann das Bedienteil platzsparend verstaut werden. Es können ferner Verschmutzungen und ggf. sogar Beschädigungen verhindert werden. Auch wird eine optimale Anordnung von transformatorisch arbeitenden Basisstationen der Haushaltsarbeitsstation auf der Kochfläche ermöglicht, da der bisher belegte Bereich für eine Bedien- und Anzeigeneinheit entfällt. Darüber hinaus kann das Bedienteil im Reparaturfall leicht ausgetauscht werden. Auch sind unterschiedliche Ausführungen in Bezug auf Größe, Design, Format, Farbe, Ausstattung, Barrierefreiheit besonders einfach verwendbar, da keine strikten Vorgaben für Außenabmessungen mehr benötigt werden. Beispielsweise kann das Bedienteil an einer Wand montierbar sein, um eine besonders nutzerfreundliche Bedienposition zu ermöglichen. Auch stellt die Abnehmbarkeit eine Kindersicherung dar, weil das Bedienteil an für Kinder unzugänglicher Stelle deponiert werden kann. Ferner kann ein Betrieb der Haushaltsarbeitsstation, z.B. ein Garprozesszustand an einer Basisstation, entfernt von der Haushaltsarbeitsstation, z.B. von anderen Räumen aus, gesteuert und/oder überwacht werden, z.B. ein Prozessende gemeldet werden. Die Funktion des Bedienteils kann insbesondere sämtliche Funktionen umfassen, welche auch von einem in die Haushaltsarbeitsstation integrierten Bedienteil wahrgenommen werden können, ggf. aber auch noch zusätzliche Funktionen.

Unter einer Haushaltsarbeitsstation kann insbesondere jegliches im Haushalt bzw. als Haushaltsgerät verwendbare Gerät verstanden werden, das einem Aufsatzgerät eine transformatorisch abgreifbare Leistung oder abgreifbares magnetisches Wechselfeld bereitstellt. Die Haushaltsarbeitsstation kann z.B. als eine im Wesentlichen ebene Arbeitsplatte ausgestaltet sein oder eine solche aufweisen. Die Haushaltsarbeitsstation kann insbesondere mindestens eine Basisstation aufweisen und insbesondere zum Betrieb der mindestens einen Basisstation eingerichtet sein und dazu beispielsweise einen Netzanschluss, eine Steuereinheit, eine Leistungselektronik usw. umfassen.

Die transformatorisch arbeitende Basisstation kann insbesondere ein magnetisches Wechselfeld erzeugen, welches von einem auf der Basisstation abgestellten elektrisch betreibbaren Aufsatzgerät abgegriffen werden kann (transformatorische Kopplung). Die transformatorisch arbeitende Basisstation kann somit durch die transformatorische Kopplung Leistung oder Energie auf das elektrisch betreibbare Aufsatzgerät, insbesondere das Bedienteil, übertragen. Das Bedienteil kann dazu insbesondere mindestens eine Spule oder mindestens eine Transformatorhälfte oder Übertragerkern aufweisen, der bzw. dem insbesondere zum Betrieb elektronischer Bauelemente wie einer integrierten Schaltung und/oder einer Anzeigeneinheit ein Gleichrichter nachgeschaltet sein kann. Die Haushaltsarbeitsstation kann beispielsweise zum Betreiben von elektrischen Aufsatz-Küchengeräten wie elektrisch betreibbarem Kochgeschirr (Topf, Pfanne usw.) oder Aufsatz-Haushaltskleingeräten wie einer Kaffeemaschine und/oder einem Toaster vorgesehen sein. Die Basisstation kann insbesondere in diesem Fall auch als eine Kochstelle bezeichnet werden.

Durch die drahtlose erste Datenschnittstelle, die z.B. eine Funkschnittstelle, insbesondere eine Bluetooth- oder eine ZigBEE-Schnittstelle, sein kann, und den wiederaufladbaren Energiespeicher wird ein Datenaustausch mit der Haushaltsarbeitsstation zum Bedienen derselben auch dann ermöglicht, wenn das Bedienteil von der Haushaltsarbeitsstation abgenommen ist. Über die erste Datenschnittstelle können z.B. Steuerbefehle an die Haushaltsarbeitsstation gesendet werden und/oder aktuelle Daten von auf der Haushaltsarbeitsstation abgesetzten Aufsatzgeräten auf das Bedienteil übertragen werden, und zwar über die Haushaltsarbeitsstation oder direkt von den Aufsatzgeräten. Alternativ oder zusätzlich kann z.B. auch eine optische Schnittstelle, z.B. eine IR-Schnittstelle verwendet werden.

Die mindestens eine Anzeigeeinheit und die mindestens eine Bedieneinheit können in einer Einheit integriert sein, z.B. in Form eines berührungsempfindlichen Bildschirms, oder voneinander getrennt vorliegen.

Der Energiespeicher kann z.B. mindestens einen Akkumulator und/oder mindestens einen Doppelschicht-Kondensator (Goldcap, Ultracap usw.) aufweisen. Der Energiespeicher kann insbesondere über die Basisstation aufladbar sein.

Es ist eine Ausgestaltung, dass das Bedienteil mindestens einen Ladeanschluss aufweist. Dadurch kann der Energiespeicher auch unabhängig von der Haushaltsarbeitsstation aufgeladen werden, z.B. über ein separates Ladegerät, was z.B. bei einer voll belegten Haushaltsarbeitsstation vorteilhaft sein kann.

Es ist noch eine Ausgestaltung, dass das Bedienteil mindestens eine zweite Datenschnittstelle aufweist. Diese kann z.B. dazu benutzt werden, um direkt (also nicht über die Haushaltsarbeitsstation) mit dem Bedienteil zu kommunizieren. So können zum Beispiel Aktualisierungen, Softwareänderungen, Rezepterweiterungen usw. einfach auf das Bedienteil aufgespielt werden. Die zweite Datenschnittstelle kann z.B. eine für eine drahtlose oder für eine drahtgebundene Datenübertragung eingerichtete Schnittstelle sein, z.B. ein WLAN-Modul, eine USB-Schnittstelle, eine Ethernet-Schnittstelle, ein Kartenschlitz usw.

Es ist noch eine Ausgestaltung, dass dem Bedienteil ein (eindeutiger) Identcode zugeordnet ist, welcher z.B. über die erste Datenschnittstelle abfragbar ist. Dadurch kann das Bedienteil von der Haushaltsarbeitsstation erkannt werden. Der Identcode kann insbesondere eine Information über die Funktion oder Eigenschaft des Bedienteils als solchem umfassen, z.B. durch ein entsprechendes Codesegment, und/oder der Identcode kann in einer Nachschlagetabelle o.ä. der Haushaltsarbeitsstation mit der Funktion bzw. Funktionen oder Eigenschaften des Bedienteil verknüpft abgelegt sein. So können z.B. ein Funktionsumfang, Bedieneigenschaften (z.B. eine Displaygröße) und/oder Kommunikationseigenschaften (z.B. nutzbare Kommunikationsraten oder Protokolle) mit der Haushaltsarbeitsstation abgestimmt werden.

Es ist noch eine Ausgestaltung, dass das Bedienteil für eine Bedienung anderer Hausgeräte, z.B. eines Kühlschranks, einer Stand-Alone-Kaffeemaschine und/oder eines anderen Haushaltskleingeräts, einer Waschmaschine, einer Spülmaschine usw. eingerichtet ist.

Die Aufgabe wird auch gelöst durch eine Haushaltsarbeitsstation mit mindestens einer darin integrierten transformatorisch arbeitenden Basisstation, wobei die Haushaltsarbeitsstation bedienteilfrei ist und eine drahtlose Datenschnittstelle, insbesondere Funkschnittstelle, zur Kommunikation mit der Haushaltsarbeitsstation aufweist. Dass die Haushaltsarbeitsstation bedienteilfrei ist, kann insbesondere bedeuten, dass sie kein von dem aufsetzbaren bzw. abnehmbaren Bedienteil separates, in die Haushaltsarbeitsstation fest integriertes Bedienteil aufweist. Dadurch kann die Haushaltsarbeitsstation, insbesondere deren Arbeitsplatte, besonders kompakt ausgeführt werden. Auch ist die Anordnung der Basisstationen freier wählbar.

Es ist eine Weiterbildung, dass die Haushaltsarbeitsstation dazu eingerichtet ist, das Bedienteil mittels eines dem Bedienteil zugeordneten Identcodes zu erkennen. Dazu kann die Haushaltsarbeitsstation über seine drahtlose Datenschnittstelle eine Abfrage nach einem Identcode aussenden und als Antwort empfangene Identcodes mit einem Bedienteil in Verbindung bringen. So kann der Identcode z.B. eine Information über die Funktion oder Eigenschaft des Bedienteils als solchem umfassen, z.B. durch ein entsprechendes Codesegment, und/oder der Identcode kann in einer Nachschlagetabelle o.ä. der Haushaltsarbeitsstation mit der Funktion bzw. Funktionen oder Eigenschaften des Bedienteils verknüpft abgelegt sein.

Es ist noch eine Weiterbildung, dass die mindestens eine Basisstation nur bei einem erkannten Bedienteil aktivierbar ist. In anderen Worten kann die Haushaltsarbeitsstation ohne ein erkanntes Bedienteil die Basisstationen sperren oder deaktivieren (wobei ein Bereitschaftsmodus zugelassen sein kann) und nur bei einem erkannten Bedienteil zum Betrieb freigeben. So kann eine unbeabsichtigte Aktivierung einer Basisstation verhindert werden. Beispielsweise können die Basisstationen in ihrem Bereitschaftsmodus, falls noch kein Aufsatzgerät auf ihnen aufgesetzt ist, jeweils in regelmäßigen Abständen oder dauerhaft auf einem Leistungsniveau betrieben werden, welches dazu ausreicht, einem darauf aufgesetzten Aufsatzgerät so viel elektrische Leistung bereitzustellen, dass das Aufsatzgerät über seine Datenschnittstelle eine Eigenschaftsinformation (z.B. Art, maximale Leistungsaufnahme usw.) aussenden kann, insbesondere ebenfalls über eine transformatorische Kopplung.

Es ist noch eine Weiterbildung, dass die Haushaltsarbeitsstation einen Hauptschalter aufweist. Dadurch kann die Haushaltsarbeitsstation unabhängig von dem Bedienteil vom Netz getrennt werden, z.B. in einem Notfall oder um Strom zu sparen. Anstelle oder zusätzlich zu einer galvanischen Trennung der Haushaltsarbeitsstation vom Netz kann der Hauptschalter auch dazu vorgesehen sein, eine Elektronik der Haushaltsarbeitsstation zu aktivieren bzw. deaktivieren. Bei deaktivierter Elektronik ist kein Betrieb einer Basisstation möglich.

Es ist noch eine Ausgestaltung, dass die Haushaltsarbeitsstation mehrere transformatorisch arbeitende Basisstationen aufweist und sämtliche Basisstationen für einen Leistungsbetrieb ausgebildet sind. Dies bedeutet, dass an den Basisstationen sowohl ein Aufsatzgerät in Form des Bedienteils als auch andere Aufsatzgeräte wie Haushaltskleingeräte, elektrisch betriebene Geschirre usw. betrieben werden kann. Dabei können insbesondere sämtliche Basisstationen gleichartig ausgebildet sein. Dies ergibt den Vorteil, dass das Bedienteil örtlich besonders variabel aufsetzbar ist und insbesondere nur eine Art von Basisstation verbaut zu werden braucht.

Es ist eine alternative Ausgestaltung, dass mindestens eine der Basisstationen zum Betrieb des Bedienteils vorgesehen und ausgestaltet ist (Bedienteil-Basisstation). Eine solche Bedienteil-Basisstation kann sich insbesondere von den für einen Leistungsbetrieb vorgesehenen Basisstationen dadurch unterscheiden, dass sie typischerweise eine nur geringere maximale Leistung bereitstellt oder zu überträgt braucht, wodurch die Bedienteil-Basisstation einfacher und preiswerter ausgestaltbar ist.

Die Aufgabe wird zudem gelöst durch ein System aus der Haushaltsarbeitsstation wie oben beschrieben und dem Bedienteil wie oben beschrieben, wobei die Haushaltsarbeitsstation und das Bedienteil für eine reichweitenbegrenzte Zusammenarbeit eingerichtet sind, so dass die Basisstationen nach Erreichen oder Überschreiten einer vorbestimmten Grenzreichweite deaktivierbar sind. Dazu können die Haushaltsarbeitsstation und/oder das Bedienteil eine Reichweitenbestimmungseinheit aufweisen. Im Fall der Haushaltsarbeitsstation kann die Reichweitenbestimmungseinheit funktional in die Steuereinheit integriert sein. Durch die reichweitenbegrenzte Zusammenarbeit wird eine fehlerunanfällige Kommunikation zwischen der Haushaltsarbeitsstation und dem Bedienteil sichergestellt. Zudem wird ein Übersprechen mit anderen Funkgeräten unterdrückt.

Die Haushaltsarbeitsstation und das Bedienteil können miteinander auch transformatorisch kommunikativ gekoppelt sein. Dies kann z.B. über die leistungsübertragenden Transformatorhälften geschehen, z.B. über Powerline-Communication (PLC), oder über eigens dafür vorgesehene Kommunikationsspulen. Die transformatorische Kopplung ist typischerweise eine Nahfeldkopplung, z.B. wirksam innerhalb eines Abstands von ca. 10 cm. Dann, wenn das Bedienteil mit einer Basisstation transformatorisch gekoppelt ist, kann diese Basisstation das Bedienteil tranformatorisch mit Leistung versorgen und Daten zwischen der Haushaltsarbeitsstation und dem Bedienteil mittels einer transformatorischen Datenübertragung oder über den separaten Kommunikationskanal miteinander austauschen. Dann, wenn das Bedienteil von der Basisstation transformatorisch entkoppelt ist, können Daten zwischen der Haushaltsarbeitsstation und dem Bedienteil über den separaten Kommunikationskanal miteinander ausgetauscht werden. Alternativ kann die Kommunikation in beiden Fällen mittels eines Kommunikationskanals zwischen der drahtlosen Kommunikationsschnittstelle, insbesondere Funkschnittstelle, der Haushaltsarbeitsstation und der ersten Schnittstelle, insbesondere Funkschnittstelle, des Bedienteils erfolgen.

In den folgenden Figuren wird die Erfindung anhand eines Ausführungsbeispiels schematisch genauer beschrieben. Dabei können zur Übersichtlichkeit gleiche oder gleichwirkende Elemente mit gleichen Bezugszeichen versehen sein.
- Fig.1: zeigt in Schrägansicht ein System aus einer Haushaltsarbeitsstation und einem davon abgenommenen und angewinkelt gezeigten Bedienteil, wobei eine Unterseite des Bedienteils sichtbar ist;
- Fig.2: zeigt in Schrägansicht das System aus Fig.1 mit Blick auf eine Vorderseite des Bedienteils;
- Fig.3: zeigt in Schrägansicht das System aus Fig.1 mit dem auf die Haushaltsarbeitsstation aufgesetzten Bedienteil in einem Ladezustand;
- Fig.4: zeigt in Schrägansicht das von der Haushaltsarbeitsstation abgenommene Bedienteil während eines Betriebs der Haushaltsarbeitsstation; und
- Fig.5: zeigt das System aus Fig.4 mit einem auf eine Basisstation der Haushaltsarbeitsstation aufgesetzten Bedienteil.

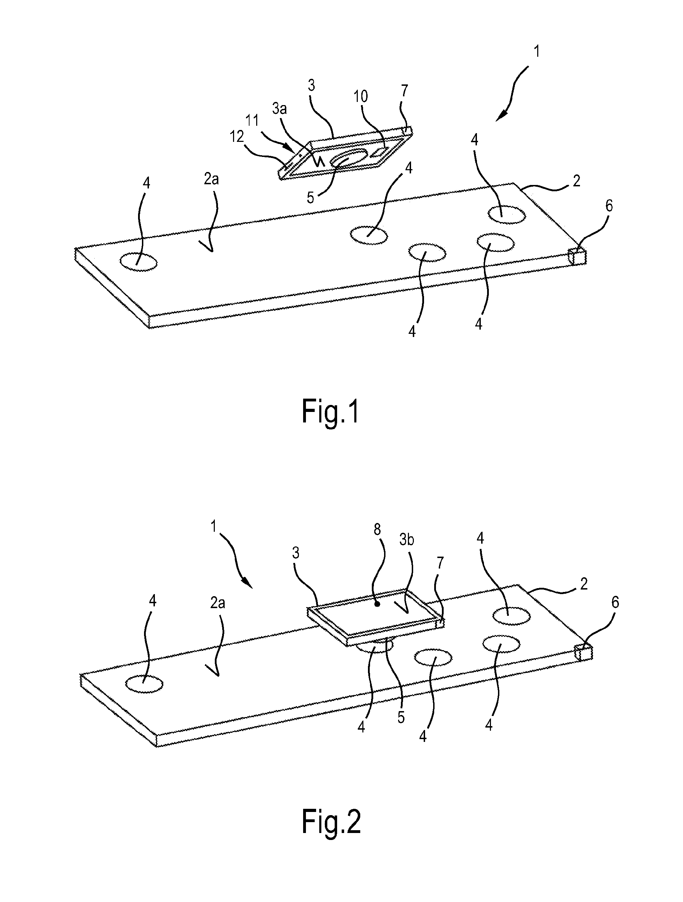

**Fig.1** zeigt ein System 1 aus einer Haushaltsarbeitsstation 2 und einem abnehmbaren Bedienteil 3 für die Haushaltsarbeitsstation 2. Die Haushaltsarbeitsstation 2 weist eine Arbeitsplatte 2a mit darin flächenbündig eingelassenen Basisstationen 4 auf. Die Basisstationen 4 weisen insbesondere jeweils eine Transformatorhälfte auf, welche zur Erzeugung eines magnetischen Wechselfelds in einem Nahbereich oberhalb der Basisstation 4 dient. Das Bedienteil 3 weist an seiner Unterseite 3a, mittels welcher es auf die Arbeitsplatte 2a der Haushaltsarbeitsstation 2 aufsetzbar ist, ebenfalls eine Transformatorhälfte 5 auf. Während die Basisstationen 4 bzw. deren Transformatorhälften als primärseitige Transformatorhälften zur Erzeugung des magnetischen Wechselfelds dienen, ist die sekundärseitige Transformatorhälfte 5 des Bedienteils 3 zum Abgriff von Energie aus dem durch die Basisstation 4 erzeugten magnetischen Wechselfeld vorgesehen.

Für die Leistungsübertragung wird das Bedienteil 3 auf eine der Basisstationen 4 aufgesetzt, so dass sich zwischen dieser Basisstation 4 und der Transformatorhälfte 5 eine transformatorische Kopplung ergibt. Dazu kann die Haushaltsarbeitsstation 2 mit einer Aufsatzgeräteerkennung ausgestattet sein, welche dazu vorgesehen ist, an einer jeweiligen Basisstation 4 einen Aufsatz und eine Art des aufgesetzten Aufsatzgeräts, z.B. des Bedienteils 3, zu erkennen. Dadurch kann die Leistungsübertragung bedarfsgerecht eingestellt werden, z.B. mit einem minimalen und/oder maximalen Leistungspegel.

Die an der Transformatorhälfte 5 abgegriffene Induktionsspannung wird zum Betrieb des Bedienteils 3 verwendet. Dazu kann der Transformatorhälfte 5 insbesondere ein Gleichrichter nachgeschaltet sein, welcher elektrisch betreibbare Elemente des Bedienteils 3 (z.B. einen berührungsempfindlichen Bildschirm 8, eine Elektronik usw.) mit Gleichspannung versorgen kann.

Das Bedienteil 3 weist ferner einen wiederaufladbaren Energiespeicher 10, beispielsweise einen Akkumulator oder einen Doppelschichtkondensator, auf, welcher ebenfalls mittels der transformatorischen Energieübertragung aufladbar ist. Mittels des Energiespeichers 10 lässt sich das Bedienteil 3 auch in einem von der Haushaltsarbeitsstation 2 abgenommenen bzw. entfernten Zustand betreiben.

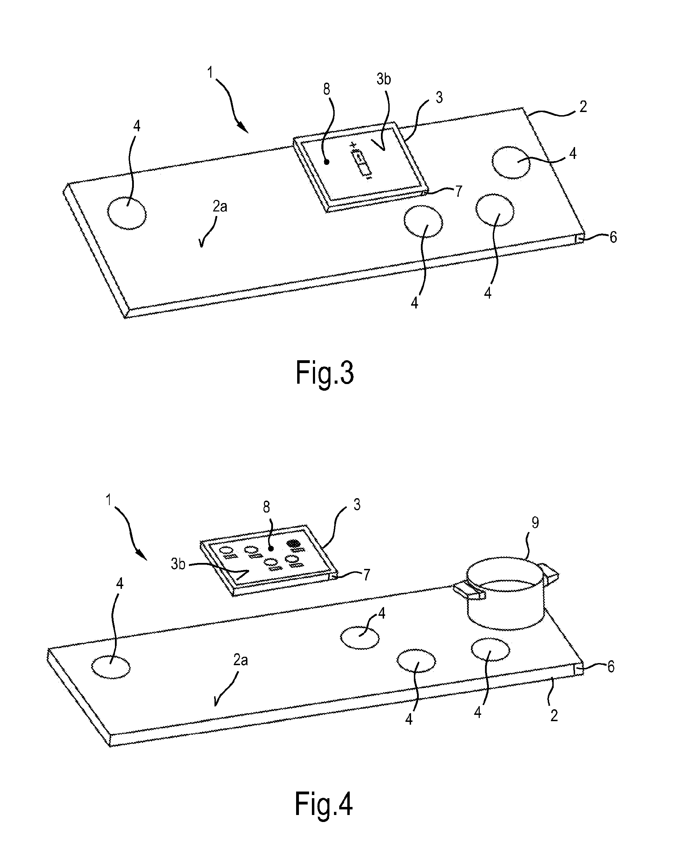

Für eine Kommunikation zwischen der Haushaltsarbeitsstation 2 und dem Bedienteil 3 ist eine Funkverbindung vorgesehen. Dazu weist die Haushaltsarbeitsstation 2 einen Funk-Transceiver 6 als drahtlose Datenschnittstelle auf, welcher in einen Datenaustausch mit einem passenden Funk-Transceiver 7 des Bedienteils 3 als erste drahtlose Datenschnittstelle treten kann. Über einen so erzeugten Funkkanal können beispielsweise Steuerbefehle zum Steuern der Basisstationen 4 von dem Bedienteil 3 an die Haushaltsarbeitsstation 2 übertragen werden, z.B. eine basisstationsspezifische Leistungsstufe. Umgekehrt können aktuelle Daten der Haushaltsarbeitsstation 2, insbesondere seiner Basisstationen 4 und/oder von auf die Basisstationen aufgesetzten Aufsatzgeräten 9 (siehe Fig.4) übertragen werden, z.B. ein Vorhandensein eines Aufsatzgeräts 9 auf einer der Basisstationen 4 und/oder aktuelle Leistungseinstellungen an den Basisstationen 4.

Wie **Fig.2** zeigt, kann das Bedienteil 3 auf jede beliebige Basisstation 4 aufgesetzt werden. Das Bedienteil 3 weist auf seiner Oberseite 3b den berührungsempfindlich ausgebildeten Bildschirm 8 auf, über welchen eine Nutzerinteraktion ablaufen kann. Das Bedienteil 3 kann aber beispielsweise auch ein Mikrofon (o. Abb.) zur Aufnahme von gesprochenen Nutzerbefehlen aufweisen.

Das Bedienteil 3 sendet, z.B. in regelmäßigen Abständen, einen Identcode an die Haushaltsarbeitsstation 2, welche daraus das Vorhandensein des Bedienteils 3 erkennt. Der Identcode kann aktiv von dem Bedienteil 3 gesendet oder von der Haushaltsarbeitsstation 2 abgefragt werden. Mit dem Identcode oder zusätzlich zu dem Identcode können auch weitere Daten von dem Bedienteil 3 abgefragt werden, z.B. dem Bedienteil 3 zugeordnete Funktionen und Eigenschaften, beispielsweise eine Bildschirmauflösung. Der Identcode kann auch zur Datenübertragung von dem Bedienteil 3 auf die Haushaltsarbeitsstation 2 verwendet werden, um das Bedienteil 3 eindeutig als Sender der Daten zu kennzeichnen. Dabei kann zwischen dem Bedienteil 3 und der Haushaltsarbeitsstation 2 eine Reichweitenbegrenzung dahingehend vorhanden sein, dass das Bedienteil 3 zur Bedienung der Haushaltsarbeitsstation 2 nur dann zugelassen wird, wenn es sich innerhalb einer vorbestimmten Reichweite oder innerhalb eines vorbestimmten Abstands von der Haushaltsarbeitsstation 2 befindet. So können erstens Kommunikationsfehler zumindest unterdrückt werden, und es kann zweitens ein Übersprechen durch andere Funkgeräte unterdrückt werden. Befindet sich das Bedienteil 3 außerhalb der vorbestimmten Reichweite oder ist es ausgeschaltet, sind die Basisstationen 4 deaktiviert, d.h., sie können zumindest nicht in einem Leistungsbetrieb betrieben werden. Das Deaktivieren der Basisstationen 4 kann ein Ausschalten der Basisstationen 4 oder nur ein Deaktivieren des Leistungsbetriebs, aber immer noch einen Bereitstellungsmodus oder Aufsatzerkennungsmodus, umfassen.

Befindet sich das Bedienteil 3 innerhalb der vorbestimmten Reichweite, kann das Bedienteil 3 wie ein fest in die Haushaltsarbeitsstation 2 integriertes Bedienteil verwendet werden, beispielsweise zur Leistungssteuerung der Basisstationen 4 oder zur Auswahl einer vorbestimmten Programmsteuerung.

Zum Betrieb und/oder zur Aufladung des Energiespeichers 10 unabhängig von einem Aufsatz auf einer der Basisstationen 4 ist das Bedienteil 3 mit einem Ladeanschluss 11 ausgerüstet, über welchen ein Ladegerät (o. Abb.) angeschlossen werden kann. Auch weist das Bedienteil 3 hier einen Kartenleser 12 zum Einführen einer Speicherkarte auf. Dadurch können beispielsweise Software-Aktualisierungen, Firmware-Aktualisierungen oder zusätzliche Software oder Daten aufgespielt werden. Beispielsweise kann über den Kartenleser 12 ein mittels des Bildschirms 8 lesbares elektronisches Kochbuch in regelmäßigen Abständen aktualisiert werden. Anstelle des Kartenlesers 12 kann auch jede andere, drahtlose und/oder drahtgebundene, Schnittstelle verwendet werden, z.B. eine Ethernet-Schnittstelle oder eine USB-Schnittstelle. Das Bedienteil 3 kann insbesondere dazu eingerichtet sein, mit einem Personal Computer oder Ähnlichem zusammenzuwirken.

Wie in **Fig.3** gezeigt, kann das Bedienteil 3 zum Aufladen des Energiespeichers 10 auf eine der Basisstationen 4 aufgesetzt werden. Wird das Bedienteil 3 nicht zur Bedienung der Basisstationen 4 aktuell verwendet, kann auf dem Bildschirm 8 eine Ladestandsanzeige angezeigt werden.

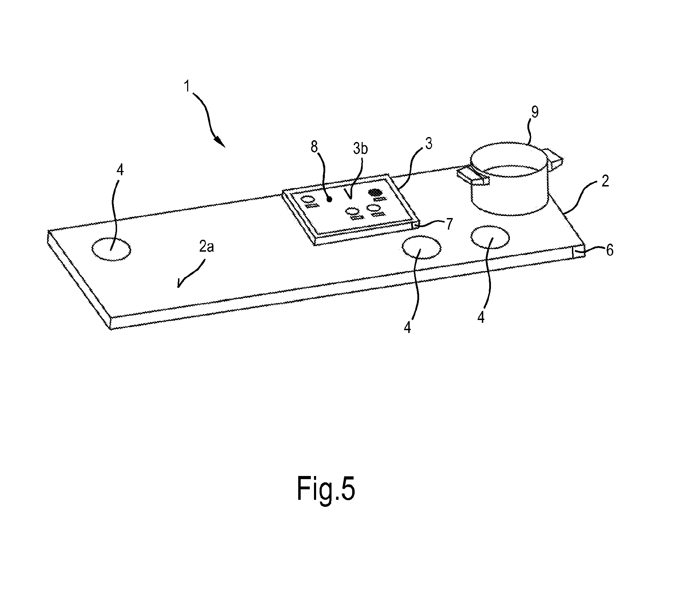

Das Bedienteil 3 kann somit zur Bedienung der Haushaltsarbeitsstation 2 sowohl im abgenommenen Zustand verwendet werden, wie in **Fig.4** gezeigt, als auch in einem auf eine der Basisstationen 4 aufgesetzten Zustand, wie in **Fig.5** gezeigt. Im abgenommenen Zustand kann das Bedienteil 3 beliebig platziert werden; beispielsweise an einer Wand aufgehängt werden. Das Bedienteil 3 kann dazu Befestigungsmittel, wie Haken oder Aussparungen, aufweisen. Bei einem Betrieb können auf dem Bildschirm 8 beispielsweise die Lage, Belegung und/oder der Zustand der Basisstationen 4 und/oder darauf aufgesetzter Aufsatzgeräte 9 angezeigt werden.

Selbstverständlich ist die vorliegende Erfindung nicht auf das gezeigte Ausführungsbeispiel beschränkt.

So können mit dem Bedienteil ein nicht berührungsempfindlicher Bildschirm und eine dedizierte Tastatur oder andere Bedienelemente verwendet werden.

### Bezugszeichenliste

- 1: System
- 2: Haushaltsarbeitsstation
- 2a: Arbeitsplatte
- 3: Bedienteil
- 3a: Unterseite des Bedienteils
- 3b: Oberseite des Bedienteils
- 4: Basisstation
- 5: Transformatorhälfte
- 6: Funk-Transceiver
- 7: Funk-Transceiver
- 8: berührungsempfindlicher Bildschirm
- 9: Aufsatzgerät
- 10: Energiespeicher
- 11: Ladeanschluss
- 12: Kartenleser

## Patentansprüche

1. Bedienteil (3) für eine Haushaltsarbeitsstation (2), wobei das Bedienteil (3) mindestens eine Anzeigeeinheit (8) und mindestens eine Bedieneinheit (8) für eine Bedienung der Haushaltsarbeitsstation (2) aufweist,
**dadurch gekennzeichnet, dass** das Bedienteil (3)
- das Bedienteil (3) zu seinem Betrieb auf die Haushaltsarbeitsstation (2) aufsetzbar ist und dadurch mit der Haushaltsarbeitsstation (2) transformatorisch koppelbar ist,
- eine drahtlose erste Datenschnittstelle (7) zur Kommunikation mit der Haushaltsarbeitsstation (2) aufweist und
- einen wiederaufladbaren Energiespeicher (10) aufweist.

2. Bedienteil nach Anspruch 1, **dadurch gekennzeichnet, dass** das Bedienteil (3) mindestens eine zweite Datenschnittstelle (12) aufweist.

3. Bedienteil (3) nach einem der vorhergehenden Ansprüche, **dadurch gekennzeichnet, dass** das Bedienteil (3) mindestens einen Ladeanschluss (11) aufweist.

4. Haushaltsarbeitsstation (2) mit mindestens einer darin integrierten transformatorisch arbeitenden Basisstation (4),
**dadurch gekennzeichnet, dass** die Haushaltsarbeitsstation (2)
- bedienteilfrei ist und
- eine drahtlose Datenschnittstelle (7) zur Kommunikation mit der Haushaltsarbeitsstation (2) aufweist.

5. Haushaltsarbeitsstation (2) nach Anspruch 4, **dadurch gekennzeichnet, dass** die Haushaltsarbeitsstation (2) dazu eingerichtet ist, das Bedienteil (3) mittels eines dem Bedienteil (3) zugeordneten Identcodes zu erkennen.

6. Haushaltsarbeitsstation (2) nach Anspruch 5, **dadurch gekennzeichnet, dass** die mindestens eine Basisstation (4) nur bei einem erkannten Bedienteil (3) aktivierbar ist.

7. Haushaltsarbeitsstation (2) nach einem der Ansprüche 4 bis 6, **dadurch gekennzeichnet, dass** die Haushaltsarbeitsstation (4) einen Hauptschalter aufweist.

8. Haushaltsarbeitsstation (2) nach einem der Ansprüche 4 bis 7, **dadurch gekennzeichnet, dass** die Haushaltsarbeitsstation (2) mehrere transformatorisch arbeitende Basisstationen (4) aufweist und sämtliche Basisstationen (4) für einen Leistungsbetrieb ausgebildet sind.

9. Haushaltsarbeitsstation nach einem der Ansprüche 4 bis 7, **dadurch gekennzeichnet, dass** die Haushaltsarbeitsstation mehrere transformatorisch arbeitende Basisstationen (4) aufweist und mindestens eine der Basisstationen zum Betrieb des Bedienteils (3) vorgesehen und ausgestaltet ist.

10. System (1) aus der Haushaltsarbeitsstation (2) nach einem der Ansprüche 4 bis 9 und dem Bedienteil (3) nach einem der Ansprüche 1 bis 3, **dadurch gekennzeichnet, dass** die Haushaltsarbeitsstation (2) und das Bedienteil (3) für eine reichweitenbegrenzte Zusammenarbeit eingerichtet sind, so dass die Basisstationen (4) nach Erreichen oder Überschreiten einer vorbestimmten Grenzreichweite deaktivierbar sind.
